Europäisches Patentamt

European Patent Office

Office européen des brevets

(19)

(11) Publication number: **0 094 848**
**B1**

# (12) EUROPEAN PATENT SPECIFICATION

(45) Date of publication of patent specification: **17.08.88**

(21) Application number: **83302883.0**

(22) Date of filing: **19.05.83**

(51) Int. Cl.⁴: **B 29 C 61/00,** H 02 G 15/04,
H 02 G 15/076

(54) Cable joint enclosure.

(30) Priority: **19.05.82 GB 8214592**

(43) Date of publication of application:
**23.11.83 Bulletin 83/47**

(45) Publication of the grant of the patent:
**17.08.88 Bulletin 88/33**

(84) Designated Contracting States:
**AT BE CH DE FR IT LI NL SE**

(56) References cited:
**DE-A-1 765 066**
**DE-A-2 421 815**
**DE-A-2 821 797**
**FR-A-2 035 436**
**FR-A-2 158 526**
**GB-A-2 104 313**
**US-A-3 518 358**
**US-A-3 557 299**

(73) Proprietor: **N.V. RAYCHEM S.A.**
**Diestsesteenweg 692**
**B-3200 Kessel-lo (BE)**

(72) Inventor: **Franckx, Joris Rene Isabella**
**Halmenhoek 7**
**B-2820 Bonheiden (BE)**
Inventor: **Mendes, Luiz Neves**
**Diestsesteenweg 784**
**B-3200 Kessel-Lo (BE)**

(74) Representative: **Benson, John Everett et al**
**Raychem Limited Intellectual Property Law**
**Department Swan House 37-39, High Holborn**
**London WC1 (GB)**

## Description

The present invention relates to an enclosure for encapsulation of cable joints, especially for use as a radial distribution point in a telecommunications system.

Cables and wires, and joints between them, must be protected from the environment and from mechanical damage if they are to maintain their desired electrical properties. Many techniques have been proposed for providing such protection including tape wrapping encapsulation by means of a potting compound, and more recently, use of recoverable polymeric materials. Mastic backed tape is able to seal a variety of configurations and sizes of cables and joints, but rarely provides a reliable seal and the mastic can degrade performance of the cable and of adhesives used in conjunction with the cable. Potting compounds are messy to handle and, if curable, do not allow a sealed joint to be reentered.

Recoverable articles, in particular heat-recoverable articles, are of particular use since they can be produced large enough easily to enclose the cable or joint and then recovered into close contact to provide the desired environmental seal. As a result, close tolerances in manufacture are not necessary.

A heat-recoverable article is an article the dimensional configuration of which may be made substantially to change when subjected to heat treatment. Usually these articles recover, on heating, towards an original shape from which they have previously been deformed, but the term "heat-shrinkable", as used herein, also includes an article which, on heating, adopts a new configuration even if it has not been previously deformed.

In their most common form, such articles comprise a heat-shrinkable sleeve or tube made from a polymeric material exhibiting the property of elastic or plastic memory as described, for example, in U.S. Patents Nos. 2,027,962, 3,086,242, and 2,027,962. The original dimensionally heat stable form may be a transient form in a continuous process in which, for example, an extruded tube is expanded, whilst hot, to a dimensionally heat unstable form but, in other applications, a preformed dimensionally heat stable article is deformed to a dimensionally heat unstable form in a separate stage. These patents and other patents and applications mentioned in this specification are incorporated herein by reference.

In the production of heat-recoverable articles, the polymeric material may be cross-linked at any stage in the production of the article that will enhance the desired dimensional recoverability. One manner of producing a heat-recoverable article comprises shaping the polymeric material into the desired heat stable form, subsequently cross-linking the polymeric material, heating the article to a temperature above the crystalline melting point or, for amorphous materials the softening point, as the case may be, of the polymer, deforming the article whilst in the deformed state so that the deformed state of the article is retained. In use, since the deformed state of the article is heat unstable, application of heat will cause the article to assume its original heat stable shape.

Recoverable articles may be made in many configurations depending on the substrate to be enclosed. Where the substrate is a simple in-line joint between two wires or cables, a sleeve or tubular recoverable article may be used. Branch-off between two or more cables may be sealed using a sleeve and a clip which holds together circumferentially spaced portions of the sleeve in the crutch region of the cables. Such an arrangement is disclosed in U.K. Patent No. 1,604,981.

US 3518358 describes an end cap for a cable enclosure comprising cable receiving portions made from a resilient material such as rubber which is adapted in various ways so that it is able to fit snugly about the cables. In one embodiment the cable receiving portions are conical in shape, an appropriate amount of the tip of the cone being cut-off so that the remaining frustoconical portion fits snugly about the selected cable. The conical receiving portions may extend on one or both sides of the end cap depending on the intended direction of insertion of the cable.

FR 2035436 describes a connector assembly comprising an end seal having heat shrinkable tubular portions adapted to receive cables. The heat shrinkable portions all face away from the enclosure.

Where a main cable is to be divided into many smaller cables, a dome shaped housing has been proposed. Such a housing has a base through which a main cable enters and a plurality of smaller wires or cables leaves. This arrangement is found in telecommunications systems where a distribution cable is divided radially into a number of subscriber lines. A radial distribution closure of this type used by British Telecom is known as 31X. The cables are sealed where they pass through the base by means of an epoxy or urethane potting compound which is injected into cavities in the base.

A similar article is disclosed in U.K. Patent No. 1,334,919 where a sealing ring and a clamping screw secure a domed part to a base through which cables pass.

European patent publication 0068381, which forms part of the state of the art according to EPC Article 54(3), discloses an article which can be used as a radial distribution enclosure in a telecommunications system. In general terms, one embodiment of the invention of this publication relates to a cable breakout article comprising a hollow body portion wherein at least part of at least one of the outlets is formed of polymeric material and is recoverable towards an unexpanded state, and the length and flexibility of the outlets is such that at least the said one of the outlets can be bent away from the other outlet(s) to an extent permitting operations to effect recovery of an expanded part of the said one of the outlets to be carried out substantially in isolation from the other outlet(s).

More specifically, an article is disclosed which comprises a domed body and a base. The base has a large hollow outlet by means of which a main cable both enters and leaves, and subsidiary outlets, onto each of which is shrunk the breakout article defined above. The subscriber lines which are taken from the main cable within the domed body, leave the domed body through the various outlets of the breakout article. Each of these outlets can be shrunk down to form a seal to the subscriber line.

What has now been devised is a modification to such an enclosure which is preferred for use when a large number of outlets are required and which avoids the sealing means for the individual subscriber lines being exposed to the environment.

Thus, the present invention provides a base for a hollow article, which comprises means adapted to be secured to a cover to provide a hollow enclosure, a first surface which together with the cover on assembly defines a closed space, a second surface which on assembly faces outwardly of the article, and at least three passages from the first to the second surface, at least one of which passages is provided with a tubular, heat recoverable outlet at the second surface and at least one of which passages is provided with a tubular, heat recoverable outlet at the first surface.

The base is preferably a base plate, by which is meant that it is generally disc shaped, and is preferably provided with tubular portions communicating with the passages on which tubular recoverable outlets may be fixed, preferably by recovering an end portion of each outlet over each tubular portion. The outlets are preferably placed over the tubular portions and secured by radial shrinkage. One or more of the outlets may be secured in this way, and preferably all of them are thus secured. The base will also generally have a recess or a flange as securing means for engagement of the cover. In this case, the cover is preferably substantially dome shaped. The tubular portions with which the passages communicate will generally be concentric with the passages and above and below the general plane of the base, but they may be for example at least partially sunk into the base. In the second case, the base will simply have an annular groove around each passage, into which the recoverable conduits can be slotted. The base including the tubular portions is preferably of unitary construction, and may comprise, for example, a moulded plastics material. In a modification, the base together with the outlets may be moulded as a single integral item.

As an alternative to the base being flat and the cover being dome shaped, the base may have depth and be closed by a simple flat cover. No limitations as to shape or size are intended by the terms base and cover, the term base simply meaning that part of the article which provides the passages for the conductors, or other substrates, and which carries the recoverable conduits. The base and the cover are each preferably of unitary construction, and may be moulded from a plastics material.

The article is of particular use for telecommunications systems where a plurality of drop wires, or other conductors, leave a distribution cable, and the invention therefore also provides a radial distribution point for a cable, which comprises:

(a) a hollow article having a base and a plurality of first tubular heat recoverable outlets on tubular portions of the base facing inside the article and a second tubular, heat-recoverable outlet on a tubular portion of the base facing out of the article;

(b) a multi-core cable which enters and leaves the article through the second outlet and is looped within the article; and

(c) a plurality of conductors which enter the article through the first outlets and which are connected within the article to conductors of the cable.

The number of drop wires is preferably at least four, more preferably at least eight, for example about ten. Where the base is a substantially flat base plate, the first outlets which seal the drop wires are preferably spaced substantially uniformly around the second outlet which carries the distribution cable.

The outlets, which are preferably in the form of conduits, are preferably internally coated with an adhesive or sealant, especially a hot-melt adhesive, by means of which environmental sealing can be achieved.

In order that the first conduits can be recovered separately, which will of course be more convenient than attempting to hold all drop wires in place at once and will be essential where some conduits are to be left empty for later use, it is preferred that each be of sufficient flexibility that it can be bent to an angle of at least 90% away from the others. It is not, however, necessary that all conduits can be so bent, since in general bending of one conduit will produce two separated conduits, and the conduit that remains unbent can be worked on.

This ability to be bent preferably results from the conduits having a ratio of length to internal diameter of at least 3.5:1, preferably at least 4:1, for example about 10:1, or from at least a portion of the conduits near the tubular portions of the base being convoluted. Bending is preferably achieved without the conduit becoming blocked and the conduits preferably have a uniform internal diameter over all or most of their length. Preferably the tubular outlet which can be bent to said extent is convoluted, at least near its end adjacent to the first surface.

Preferably the base has one tubular outlet at the second surface which has a diameter greater than any of the tubular outlets at the first surface.

The number of drop wires that are sealed can be greater than the number of first conduits either by passing two drop wires (or pairs of drop wires) through one or each of the first conduits, or by using a breakout article instead of a simple tube as the conduit. Such a breakout article will comprise a hollow body portion (to be attached to the tubular portion of the base) and at least two elongate hollow outlets from the body portion, the length and flexibility of the outlets being such that at least one of the outlets can be bent away from the other outlets to an extent permitting operations to be carried out on said one of the outlets substantially in isolation from the others.

The number of drop wires sealed may be less than the number of passages through the base, since the base can be provided with webs blanking-off the passages until they are required. These webs may be provided with a weakened peripheral portion which can be broken when pressure is applied thereto so that the web can be removed.

The invention will be further illustrated, by way of example, with reference to the accompanying drawings, in which:

Figure 1 is a perspective view of a base for a hollow article;

Figure 2 is a cross-section taken on the line AA' of Figure 1;

Figure 3 is a perspective view of the base of Figure 1, including recoverable conduits;

Figure 4 is a perspective view of base, recoverable conduits and cables; and

Figure 5 shows in elevation a complete assembly.

The embodiment shown in the drawings is one suitable for sealing a breakout of about eight pairs from a telecommunications cable, at some point remote from the end of the cable. The way this is done is to bend the cable to form a loop, insert the loop into a central passage in the base plate of an enclosure, and join to selected pairs within the cable drop wires which enter the enclosure through a series of passages spaced around the central passage.

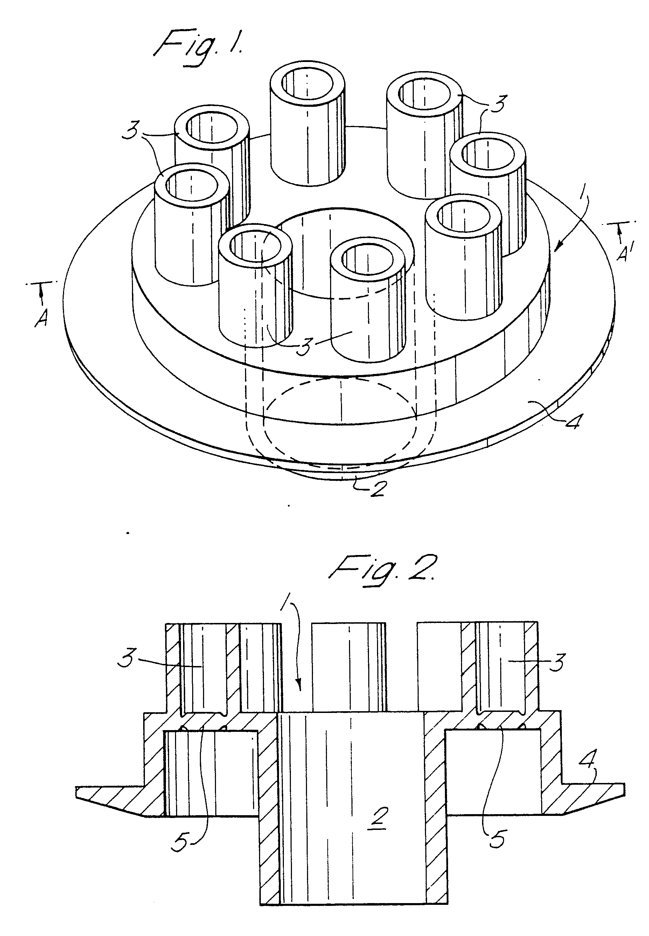

The base, in the form of a base plate, is shown in Figure 1 in perspective view, and labelled, 1. It has a central passage terminating in a tubular portion 2 and a series of outer passages terminated in tubular portions 3. The main cable enters and leaves through the central passage, and it is through the outer passages that the drop wires enter to make connection to the relevant pairs of the main cable. The base has a flange 4 against which a cover abuts to allow good engagement.

The same base is shown in Figure 2, but as a cross-sectional elevation taken on line AA' of Figure 1. The outer passages are shown blocked by webs 5. The purpose of these webs is to allow the enclosure to be properly sealed without the full complement of outer passages being used. The base would conveniently be supplied with all outer passages blocked (or perhaps all but one) and before use a number of webs removed corresponding to the number of drop wires to be connected. It is because of these webs that the number of pairs of drop wires which can be sealed with the base illustrated may be less than eight. Other temporary means of blocking unused outer passages could of course be employed. The base illustrated could be used with more than eight pairs of drop wires by feeding more than one pair through each outer passage. It is preferred however that only one pair passes through each outer passage since a better seal is thus ensured.

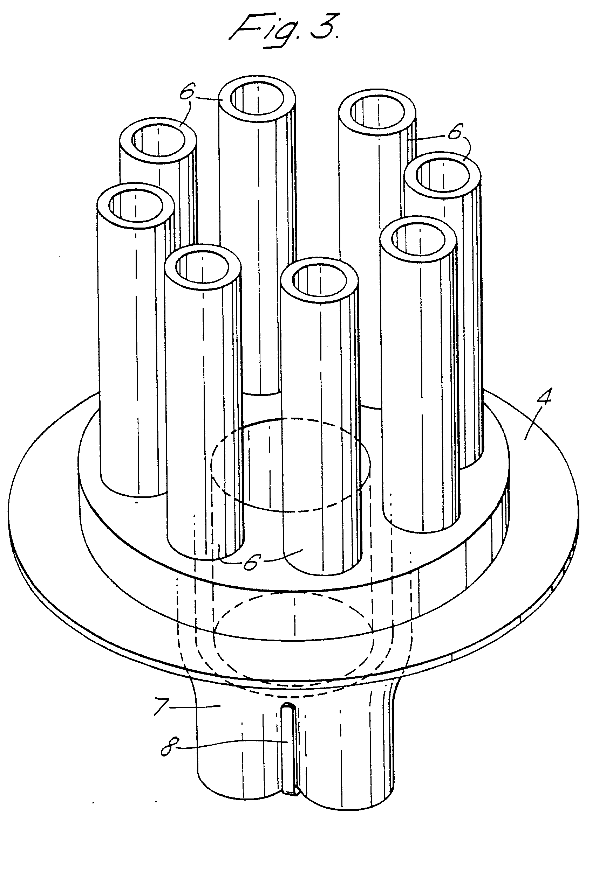

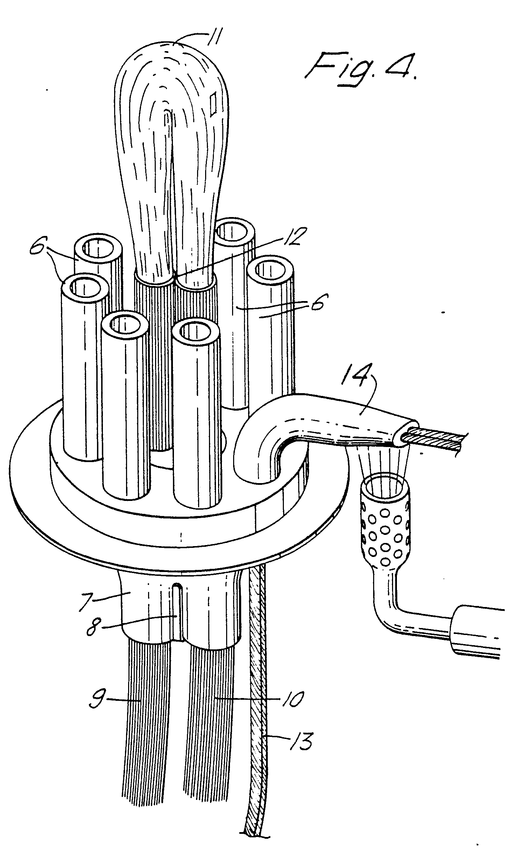

The way that the cables and wires are sealed will be described with reference to Figures 3 and 4. In Figure 3 tubular recoverable outlets 6 in the form of conduits are shown on the tubular portions 3, and a tubular recoverable outlet 7 in the form of a conduit is shown on the tubular portion 2. The recoverable conduits 6 and 7 are preferably recoverable along their entire lengths, and are preferably shrunk onto the tubular portions 2 and 3. Other ways of attaching them to the base may, however, be employed. Each conduit may be provided with an internal coating of a heat-activatable sealant, such as hot-melt adhesive, where a high quality seal is required. Where jelly filled cables are used the amount of sealant in the conduit may be increased such that on recovery the sealant fulfils a cable blocking function. Protection for the sealant prior to use may require the conduit to be provided with a plug to prevent entry of jelly, grease, or dirt. Figure 3 also shows a branch-off clip 8, the function of which is to help seal the crutch region between the ingoing and outgoing lines of the main cable. The clip 8 would normally be inserted after the main cable had been installed, and the cable is omitted from this figure for clarity. A preferred branch-off clip is one having three legs. The clip is inserted at the end of the conduit 7 with the outer legs outside the conduit and a central leg coated with adhesive or sealant within the conduit. Use of such a clip is disclosed and claimed in U.K. Patents Nos. 1,604,985 and 1,604,986.

The cables are shown in position in Figure 4. A main cable enters the conduit 7 at position 9 and leaves at position 10 after describing a loop 11 above the base. The conduit 7 is shown in its recovered configuration with the branch-off clip 8 helping to seal the region between the ingoing and outgoing cables. The sheath of the main cable has been removed above a position 12 as drawn, in order to allow access to the individual wire pairs.

A drop wire 13 has been installed through one of the outer passages and is shown emerging from a recoverable conduit 14. A torch or hot air gun is shown causing recovery to the free end of the recoverable conduit.

It can be seen from the drawings that the conduits 6 are sufficiently long that one can be bent away from the others to enable it to be attended to, particularly to allow it to be recovered, independently of the others.

The separation of the conduits for the drop wires and the conduit for the main cable on opposite sides of the base means that there will in general be more room for operations to be made on one conduit without affecting any of the others. In addition, the enclosure can be made smaller, or more conduits can be provided for a given size of base using the principle of the present invention. The end of the drop wire 13 which protrudes from the free end of the conduit 14 will later be connected to the relevant wire pair in the part of the main cable that has been bared of its jacket. Such connection could be made before recovery of the end of the conduit, but this would prevent easy bending of the conduit away from the others during recovery.

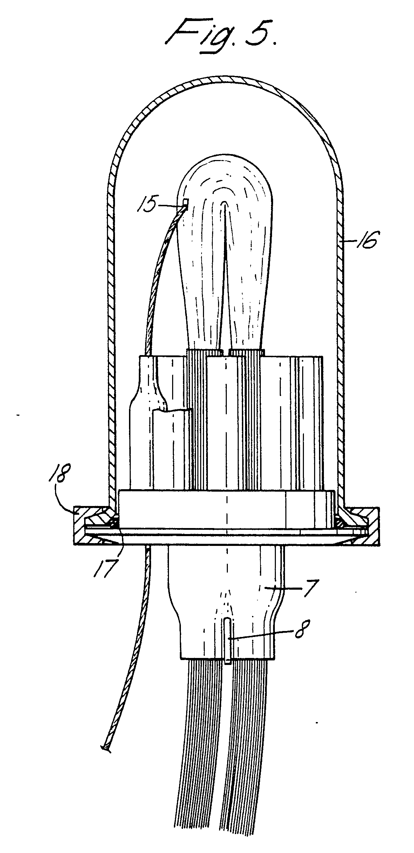

Figure 5 shows the base 1, main cable 9, 10, a drop wire 13 and a cover 16 which houses the connections. The drop wire 13 is connected to the main cable by a connector 15 which may be a mechanical crimp connector or for higher performance may be a sealed solder connector such as that marketed under the Raychem trademark Solder Sleeve.

The cover 16 is sealed to the base 1 by means of an O-ring 17 and a clamping ring 18 which forces the flange 4 and the base of the cover together, compressing the O-ring between them.

A further advantage of the positioning of the conduits 6 on a side of the base opposite that of the main cable, and thus within the cover 16 can be appreciated from Figure 5: the system can be pressurized for testing, for example by means of a valve in the wall of cover 16, without causing any adhesive on the conduits 6 to be put into peel. A positive pressure within the enclosure will enhance the seal of the conduits 6 onto both the drop wires and onto the tubular portions 3. This enables the conduits to be formed of softer material having a lower shrink temperature and minimises the risk of damage to the drop wire insulation which may be caused by overheating on installation. If desired, the main cable can be sealed in the same way (the necessary tubular portions for the two branches of the main cable above the base are not shown in the drawings) but this will not generally be required since a satisfactory pressure resistant seal around the relatively large main cable can be achieved using the branch-off clip described.

**Claims**

1. A base (1) for a hollow article, which comprises means (4) adapted to be secured to a cover (16) to provide a hollow enclosure, a first surface which together with the cover (16) on assembly defines a closed space, a second surface which on assembly faces outwardly of the article, and at least three passages from the first surface to the second surface, at least one of which passages is provided with a tubular, heat-recoverable outlet (7) at the second surface and at least one of which passages is provided with a tubular, heat-recoverable outlet (6) at the first surface.

2. A base according to Claim 1, which is provided with a recess or a flange (4) as securing means for engagement of the cover.

3. A base according to claim 1 or 2, wherein at least one tubular outlet (6) on the first surface, and one tubular outlet (7) on the second surface are adapted to receive objects inserted into the outlets from the same direction, preferably from the direction such that on insertion the objects pass first the second surface and then the first surface of the base.

4. A base according to Claims 1, 2 or 3, in which at least one of the tubular outlets (6, 7) is attached to a tubular portion (2, 3) of the base which communicates with one of the passages.

5. A base according to claim 4, in which said tubular outlet (6, 7) is attached to said tubular portion (2, 3) by recovery of an end portion of said outlet (6, 7).

6. A base according to any preceding claim, in which the length and flexibility of the tubular outlets (6) at the first surface are such that at least one of them can be bent away from the others to an extent permitting operations to effect recovery of one of them substantially in isolation from the others.

7. A base according to Claim 6, in which each tubular outlet (6) which can be bent to said extent is convoluted at least near its end adjacent to the first surface.

8. A base according to any preceding claim in which each tubular outlet (6) at the first surface has a ratio of length to internal diameter of at least 3.5:1.

9. A base according to any of claims 4, 5 or 6, in which a tubular outlet at the first surface is a cable breakout article; said breakout article comprising a hollow body portion attached to the tubular portion and having at least two elongate hollow outlets from the body portion, the length and flexibility of the elongate outlets being such that at least one of the elongate outlets can be bent away from the other elongate outlets to an extent permitting operations to be carried out on one of the elongate outlets substantially in isolation from the others.

10. A base according to any preceding claim, having at least four passages, preferably about eight passages, provided with said tubular outlets (6) at the first surface.

11. A base according to any of the preceding claims, having one said tubular outlet (7) at the second surface, said outlet (7) at the second surface having a diameter greater than any of the tubular outlets (6) at the first surface.

12. A base according to any preceding claim, in which the first surface is substantially parallel to the second surface, and a plurality of said tubular outlets (6) at the first surface are substantially uniformly spaced around a single said tubular outlet (7) at the second surface.

13. A base according to any preceding claim, which additionally comprises a branch-off clip (8) by means of which diverging substrates can be sealed at a tubular outlet (7) at the second surface.

14. A base according to any preceding claim, in which each tubular outlet (6, 7) has an internal coating of an adhesive or sealant.

15. A base according to claim 14, in which each tubular outlet (6, 7) has an internal coating of a hot-melt adhesive.

16. A base according to any preceding claim, in which the base (14) is of unitary construction.

17. A base according to any preceding claim, in which the base (4) comprises a moulded plastics material.

18. A base according to any preceding claim in which one or more of the passages in the base (4) is sealed with a removable web (5).

19. A hollow article comprising a cover (16) and a base (14) according to any of the preceding claims.

20. A hollow article according to claim 19, in which the base (4) is a base plate and a cover (16) is substantially dome shaped.

21. A hollow article according to claim 19 or 20, in which the base (4) or the cover (16) has a one way valve by means of which the article can be pressurised.

22. A radial distribution point for a cable which comprises:

(a) a hollow article having a base (4) and a plurality of first tubular, heat-recoverable outlets (6) on tubular portions (3) of the base facing inside the article, and a second tubular heat, recoverable outlet (7) on a tubular portion (2) of the base facing out of the article;

(b) a multi-core cable (9, 10) which enters and leaves the article through the second outlet (7) and is looped (11) within the article; and

(c) a plurality of conductors (13) which enter the article through the first outlets (6) and which are connected within the article to the conductors of the cable (10, 11).

23. A radial distribution point according to claim 22, being for a telecommunications system, in which the multi-core cable is a distribution cable (10, 11), and the conductors in (c) (13) are drop wires.

24. A radial distribution point according to claim 22 or 23 in which the conductors (13) are electrical conductors.

25. A radial distribution point according to claim 22, 23 or 24 in which a branch-off between the ingoing (13) and outgoing (11) parts of the multi-core cable at the second recoverable conduit is sealed by a branch-off clip (8).

26. A radial distribution point according to any of claims 22 to 25, wherein the majority of tubular outlets (6) face inside the article.

27. A radial distribution point according to any of claims 22 to 25, wherein the base (4) has one tubular outlet (7) facing outside which has a diameter greater than any of the tubular outlets (6) facing inside.

## Patentansprüche

1. Grundteil (1) für einen hohlen Gegenstand, der eine Einrichtung (4) aufweist, die derart beschaffen ist, daß sie mit einem Deckel (16) zur Bildung eines hohlen Gehäuses fest verbindbar ist, der eine erste Fläche aufweist, die zusammen mit dem Deckel (16) bei der Montage einen geschlossenen Raum begrenzt, der eine zweite Fläche aufweist, die bei der Montage von dem Gegenstand nach außen weist, und der wenigstens drei Durchgänge von der ersten Fläche zu der zweiten Fläche hat, von denen wenigstens einer mit einem rohrförmigen, wärmerückstellbaren Auslaß (7) an der zweiten Fläche versehen ist und von denen wenigstens einer mit einem rohrförmigen, wärmerückstellbaren Auslaß (6) an der ersten Fläche versehen ist.

2. Grundteil nach Anspruch 1, das mit einer Ausnehmung oder einem Flansch (4) als Befestigungseinrichtung zum Eingreifen des Deckels versehen ist.

3. Grundteil nach Anspruch 1 oder 2, bei dem wenigstens ein rohrförmiger Auslaß (6) an der ersten Fläche und ein rohrförmiger Auslaß (7) an der zweiten Fläche derart beschaffen sind, daß sie in die Auslässe von ein und derselben Richtung vorzugsweise von einer solchen Richtung eingeführte Gegenstände aufnehmen, daß beim Einführen die Gegenstände zuerst durch die zweite Fläche und dann die erste Fläche des Grundteils gehen.

4. Grundteil nach Anspruch 1, 2 oder 3, bei dem wenigstens einer der rohrförmigen Auslässe (6, 7) bei einem rohrförmigen Abschnitt (2, 3) des Grundteils angebracht ist, das mit einem der Durchgänge in Verbindung steht.

5. Grundteil nach Anspruch 4, bei dem der rohrförmige Auslaß (6, 7) an dem rohrförmigen Abschnitt (2, 3) durch Rückstellung eines Endabschnitts des Auslasses (6, 7) angebracht ist.

6. Grundteil nach einem der vorangehenden Ansprüche, bei dem die Länge und die Flexibilität der rohrförmigen Auslässe (6) an der ersten Fläche derart sind, daß wenigstens einer derselben von den anderen in einem solchen Maße weggebogen werden kann, daß die Arbeiten zur Rückstellung des einen im wesentlichen getrennt von den anderen vorgenommen werden können.

7. Grundteil nach Anspruch 6, bei dem jeder rohrförmige Auslaß (6), der in diesem Maße biegbar ist, wenigstens in der Nähe seines der ersten Fläche benachbarten Endes gewunden ist.

8. Grundteil nach einem der vorangehenden Ansprüche, bei dem jeder rohrförmige Auslaß (6) an der ersten Fläche ein Verhältnis von Länge zu Innendurchmesser von wenigstens 3,5:1 hat.

9. Grundteil nach einem der Ansprüche 4, 5 oder 6, bei dem der rohrförmige Auslaß an der ersten Fläche ein Kabelabzweiggegenstand ist, der Abzweiggegenstand einen hohlen Körperabschnitt aufweist, der an dem rohrförmigen Abschnitt angebracht ist und wenigstens zwei längliche hohle Auslässe aus dem Körperabschnitt hat, die Länge und Flexibilität der länglichen Auslässe derart sind, daß wenigstens einer der länglichen Auslässe von den anderen länglichen Auslässen in einem solchen Maße weggebogen werden kann, daß Arbeiten an einem der länglichen Auslässe im wesentlichen getrennt von den anderen vorgenommen werden können.

10. Grundteil nach einem der vorangehenden Ansprüche, das wenigstens vier Durchgänge, vorzugsweise etwa acht Durchgänge, hat, die mit rohrförmigen Auslässen (6) an der ersten Fläche versehen ist.

11. Grundteil nach einem der vorangehenden Ansprüche, der einen rohrförmigen Auslaß (7) an der zweiten Fläche hat, wobei der Auslaß (7) an der zweiten Fläche einen Durchmesser hat, der größer als alle Durchmesser der rohrförmigen Auslässe (6) an der ersten Fläche ist.

12. Grundteil nach einem der vorangehenden Ansprüche, bei dem die erste Fläche im wesentlichen parallel zur zweiten Fläche ist und bei dem eine Mehrzahl von rohrförmigen Auslässen (6) an der ersten Fläche im wesentlichen gleichförmig um einen einzigen rohrförmigen Auslaß (7) an der zweiten Fläche im Abstand angeordnet ist.

13. Grundteil nach einem der vorangehenden Ansprüche, das zusätzlich eine Abzweigklammer (8) aufweist, mittels der die divergierenden Substrate an dem rohrförmigen Auslaß (7) an der zweiten Fläche abgedichtet werden können.

14. Grundteil nach einem der vorangehenden Ansprüche, bei dem jeder rohrförmige Auslaß (6, 7) einen inneren Überzug aus einem Klebstoff oder einem Dichtmittel hat.

15. Grundteil nach Anspruch 14, bei dem jeder rohrförmige Auslaß (6, 7) einen inneren Überzug aus einem Schmelzklebstoff hat.

16. Grundteil nach einem der vorangehenden Ansprüche, bei dem das Grundteil (14) eine einheitliche Konstruktion hat.

17. Grundteil nach einem der vorangehenden Ansprüche, bei dem das Grundteil (4) ein Formkunststoffmaterial aufweist.

18. Grundteil nach einem der vorangehenden Ansprüche, bei dem ein oder mehrere Durchgänge im Grundteil (4) mit einem entfernbaren Steg (5) dicht verschlossen ist oder sind.

19. Hohler Gegenstand, der einen Deckel (16) und ein Grundteil (14) gemäß einem der vorangehenden Ansprüche aufweist.

20. Hohler Gegenstand nach Anspruch 19, bei dem das Grundteil (4) eine Grundplatte ist und ein Deckel (16) im wesentlichen kuppelförmig ausgebildet ist.

21. Hohler Gegenstand nach Anspruch 19 oder 20, bei dem das Grundteil (4) oder der Deckel (16) ein Einwegventil hat, mittels dem der Gegenstand unter Druck gesetzt werden kann.

22. Radiale Verteilerstelle für ein Kabel, die aufweist:

(a) einen hohlen Gegenstand, der ein Grundteil (4) und eine Mehrzahl von ersten rohrförmigen, wärmerückstellbaren Auslässen (6) an rohrförmigen Abschnitten (3) des ins Innere des Gegenstandes weisenden Grundteils und einen zweiten rohrförmigen, wärmerückstellbaren Auslaß (7) an einem rohrförmigen Abschnitt (2) des vom Gegenstand nach außen weisenden Grundteils hat,

(b) ein mehradriges Kabel (9, 10), das in den Gegenstand über den zweiten Auslaß (7) eintritt und austritt und das in dem Gegenstand schleifenförmig (11) verlegt ist, und

(c) eine Mehrzahl von Leitern (13), die in den Gegenstand über die ersten Auslässe (6) eintreten und die im Innern des Gegenstandes mit Leitern des Kabels (10, 11) verbunden sind.

23. Radiale Verteilerstelle nach Anspruch 22 für ein Fernmeldesystem, bei der das mehradrige Kabel ein Verteilerkabel (10, 11) und die Leiter in (c) Sprechstelleneinführungsleitungen (13) sind.

24. Radiale Verteilerstelle nach Anspruch 22 oder 23, bei der die Leiter (13) elektrische Leiter sind.

25. Radiale Verteilerstelle nach Anspruch 22, 23 oder 24, bei der eine Abzweigung zwischen den eintretenden (13) und den austretenden (11) Teilen des mehradrigen Kabels an der zweiten rückstellbaren Leitung mittels einer Abzweigklammer (8) abgedichtet ist.

26. Radiale Verteilerstelle nach einem der Ansprüche 22 bis 25, bei der der Großteil der rohrförmigen Auslässe (6) in das Innere des Gegenstands weist.

27. Radiale Verteilerstelle nach einem der Ansprüche 22 bis 25, bei der das Grundteil (4) einen nach außen weisenden rohrförmigen Auslaß (7) hat, der einen Durchmesser hat, der größer als jener aller rohrförmigen, nach innen weisenden Auslässe (6) ist.

**Revendications**

1. Base (1) destinée à un article creux, qui comprend des moyens (4) destinés à être fixés à un couvercle (16) pour constituer une boîte creuse, une première surface qui, avec le couvercle (16), lors de l'assemblage, définit un espace fermé, une seconde surface qui, lors de l'assemblage, est tournée vers l'extérieur de l'article, et au moins trois passages depuis la première surface jusqu'à la seconde surface, dont au moins un est muni d'une sortie tubulaire douée de reprise de forme à la chaleur (7) au niveau de la seconde surface et au moins un desdits passages étant muni d'une sortie tubulaire douée de reprise de forme à la chaleur (6) au niveau de la première surface.

2. Base selon la revendication 1, qui comporte une cavité ou une bride (4) en tant que moyen de fixation pour le contact avec le couvercle.

3. Base selon la revendication 1 ou la revendication 2, dans laquelle au moins une sortie tubulaire (6) sur la première surface et une sortie tubulaire (7) sur la seconde surface sont destinées à recevoir des articles insérés dans les sorties depuis la même direction, de préférence depuis la direction telle que lors de l'insertion, les articles franchissent tout d'abord la seconde surface et ensuite la première surface de la base.

4. Base selon les revendications 1, 2 ou 3, dans laquelle au moins l'une des sorties tubulaires (6, 7) est attachée à une partie tubulaire (2, 3) de la base qui communique avec l'un des passages.

5. Base selon la revendication 4, dans laquelle la sortie tubulaire (6, 7) est attachée à la partie tubulaire (2, 3) par reprise de forme d'une partie d'extrémité de ladite sortie (6, 7).

6. Base selon l'une quelconque des revendications précédentes, dans laquelle la longueur et la flexibilité des sorties tubulaires (6) au niveau de la première surface sont telles qu'au moins l'une d'entre elles puisse être pliée à l'écart des autres à un degré permettant des opérations pour effectuer une reprise de forme de l'une d'entre elles de façon sensiblement isolée par rapport aux autres.

7. Base selon la revendication 6, dans laquelle chaque sortie tubulaire (6) qui peut être pliée audit degré est convolutée au moins près de son extrémité voisine de la première surface.

8. Base selon l'une quelconque des revendications précédentes, dans laquelle chaque sortie tubulaire (6) au niveau de la première surface a un rapport de la longueur au diamètre interne d'au moins 3,5:1.

9. Base selon l'une quelconque des revendications 4, 5 ou 6, dans laquelle une sortie tubulaire au niveau de la première surface est un élément de sortie de câble; ledit élément de sortie de câble comprenant une partie principale creuse attachée à la partie tubulaire et ayant au moins deux sorties creuses allongées à partir de la partie principale, la longueur et la flexibilité des sorties allongées étant telles qu'au moins l'une des sorties allongées peut être pliée à l'écart des autres sorties allongées à un degré permettant d'effectuer des opérations sur l'une des sorties allongées de façon sensiblement isolée par rapport aux autres.

10. Base selon l'une quelconque des revendications précédentes, ayant au moins quatre passages, de préférence environ huit passages, prévus avec lesdites sorties tubulaires (6) au niveau de la première surface.

11. Base selon l'une quelconque des revendications précédentes ayant une desdites sorties tubulaires (7) au niveau de la seconde surface, ladite sortie (7) au niveau de la seconde surface ayant un diamètre plus grand que l'une quelconque des sorties tubulaires (6) au niveau de la première surface.

12. Base selon l'une quelconque des revendications précédentes, dans laquelle la première surface est sensiblement parallèle à la seconde surface, et plusieurs desdites sorties tubulaires (6) au niveau de la première surface sont sensiblement espacées de façon uniforme autour d'une seule sortie tubulaire (7) au niveau de la seconde surface.

13. Base selon l'une quelconque des revendications précédentes, qui comprend additionnellement une pince de dérivation (8) au moyen de laquelle on peut sceller de façon étanche des substrats divergents au niveau d'une sortie tubulaire (7) à la seconde surface.

14. Base selon l'une quelconque des revendications précédentes, dans laquelle chaque sortie tubulaire (6, 7) a un revêtement interne d'un adhésif ou d'une matière d'étanchéité.

15. Base selon la revendication 14, dans laquelle chaque sortie tubulaire (6, 7) a un revêtement interne d'un adhésif thermofusible.

16. Base selon l'une quelconque des revendications précédentes, dans laquelle la base (14) a une structure unitaire.

17. Base selon l'une quelconque des revendications précédentes, dans laquelle la base (4) comprend une matière plastique moulée.

18. Base selon l'une quelconque des revendications précédentes, dans laquelle un ou plusieurs des passages de la base (4) sont obturés de façon étanche par un voile amovible (5).

19. Article creux comprenant un couvercle (16) et une base (14) selon l'une quelconque des revendications précédentes.

20. Article creux selon la revendication 19, dans lequel la base (4) est une plaque de base et un couvercle (16) est sensiblement en forme de dôme.

21. Article creux selon la revendication 19 ou 20, dans lequel la base (4) ou le couvercle (16) a une valve à une direction au moyen de laquelle l'article peut être mis sous pression.

22. Point de distribution radiale pour un câble qui comprend:

(a) un article creux ayant une base (4) et plusieurs premières sorties (6) tubulaires douées de reprise de forme à la chaleur sur des parties tubulaires (3) de la base tournées vers l'intérieur de l'article, et une seconde sortie tubulaire douée de réprise de forme à la chaleur (7) sur une partie tubulaire (2) de la base tournée vers l'extérieur de l'article;

(b) un câble (9, 10) à plusieurs âmes qui entre dans l'article et le quitte à travers la seconde sortie (7) et qui forme une boucle (11) à l'intérieur de l'article; et

(c) plusieurs conducteurs (13) qui entrent dans l'article par les premières sorties (6) et qui sont connectés à l'intérieur de l'article aux conducteurs du câble (10, 11).

23. Point de distribution radiale selon la revendication 22, destiné à un système de télécommunications dans lequel le câble à plusieurs âmes est un câble de distribution (10, 11) et les conducteurs en (c) (13) sont des fils de branchement d'abonnés.

24. Point de distribution radiale selon la revendication 22 ou 23, dans lequel les conducteurs (13) sont des conducteurs électriques.

25. Point de distribution radiale selon la revendication 22, 23 ou 24, dans lequel une dérivation entre les pièces d'entrée (13) et de sortie (11) du câble à plusieurs âmes au niveau de la seconde conduite douée de reprise de forme est scellée de façon étanche par une pince de dérivation (8).

26. Point de distribution radiale selon l'une quelconque des revendications 22 à 25, dans lequel la majorité des sorties tubulaires (6) est tournée vers l'intérieur de l'objet.

27. Point de distribution radiale selon l'une quelconque des revendications 22 à 25, dans lequel la base (4) a une sortie tubulaire (7) tournée vers l'extérieur et d'un diamètre plus grand que l'une quelconque des sorties tubulaires (6) tournées vers l'intérieur.

Fig. 1.

Fig. 2.

Fig. 3.

0 094 848

Fig. 4.

3

# Fig. 5.